# EUROPEAN PATENT APPLICATION

(11) **EP 3 747 925 A1**
(43) Date of publication of application: **09.12.2020**
(21) Application number: 19179164.9
(22) Date of filing: 07.06.2019
(51) Int. Cl.: C08G 61/12, C08L 65/00, C09J 165/00, C09D 165/00

(54) **RADIATION-CURABLE COMPOSITION BY ANIONIC POLYMERIZATION**

(71) Applicant: Henkel AG & Co. KGaA, 40589 Düsseldorf (DE)
(72) Inventor: ITO, Kenji, 40597 Düsseldorf (DE)

(57) **Abstract**

The present invention refers to a radiation-curable composition comprising or consisting of
A) at least one photo-base generator, which can generate a super base;
B) (macro)monomers which are able to undergo an anionic polymerization via Michael addition comprising or consisting of
B1) at least one (macro)monomer having at least one Michael donor group and at least one Michael acceptor group; and/or
B2) at least one (macro)monomer having at least two Michael donor groups and at least one (macro)monomer having at least two Michael acceptor groups;
C) optionally at least one polyethylenimine;
D) optionally at least one additive.

Furthermore, the present invention pertains to an adhesive, sealant or coating obtainable by radiation-curing the radiation-curable composition according to the present invention and a method of radiation-curing the radiation-curable composition according to the present invention, comprising the steps:
providing a radiation-curable composition according to the present invention and exposing the radiation-curable composition to radiation, for 10 seconds to 5 minutes. The radiation-curable compositions of the present invention do not require that irradiation is continuously applied until the curing is completed. Once the curing of the compositions is initiated, they are able to continue to cure in parts of the compositions which are in the dark/shadow.

## Description

The present invention refers to a radiation-curable composition comprising or consisting of
A) at least one photo-base generator, which can generate a super base;
B) (macro)monomers which are able to undergo an anionic polymerization via Michael addition comprising or consisting of
B1) at least one (macro)monomer having at least one Michael donor group and at least one Michael acceptor group; and/or
B2) at least one (macro)monomer having at least two Michael donor groups and at least one (macro)monomer having at least two Michael acceptor groups;
C) optionally at least one polyethylenimine;
D) optionally at least one additive.

Furthermore, the present invention pertains to an adhesive, sealant or coating obtainable by radiation-curing the radiation-curable composition according to the present invention and a method of radiation-curing the radiation-curable composition according to the present invention, comprising the steps:
providing a radiation-curable composition according to the present invention and exposing the radiation-curable composition to radiation, for 10 seconds to 5 minutes.

Radiation initiated polymerization is one of the most important technologies for adhesives, coatings, sealants, and photoresists. Radiation-curing is typically well suited for fast production and is recognized as an environmentally benign process because of fast curing at ambient temperature upon short irradiation of light. There are three types of radiation-curing mechanism via radical, cationic, and anionic polymerization. Radical and cationic initiators have been commonly employed for radiation-curing in industries. Several drawbacks, however, have been recognized in radiation-radical and radiation-cationic polymerization. Radical and cationic polymerization are inhibited by oxygen and water, respectively, and therefore the polymerizations have to carried out in an inert atmosphere with controlled moisture to avoid incomplete curing. The fact that radical polymerization is inherently incapable of dark cure requires continuous irradiation to complete the curing and causes incomplete cure in the shadow area. In contrast, anionic polymerization is known to be insensitive to both oxygen and water. It is also known that anionic polymerization proceeds in the dark. There have been strong demands in market for radiation-anionic polymerization and therefore radiation-anionic polymerization has recently attracted the more research interest. For example, various types of photo-base generators (PBG) have been developed to initiate anionic polymerization. Radiation-anionic polymerization initiated by PBG, however, has been applied to only limited applications in industry due to slow reaction and out-gas such as CO₂ generating from certain PBG despite its advantages. The generating out-gas will stay in the cured polymer to cause mechanical failure in adhesives and to damage coating quality.

Photo-base generator generating super base such as amidines and guanidines have been developed recently and therefore its application in industries are still very limited, although the superbase such as amidines and guanidines have been widely employed as an initiator in industries for thermal curing.

Guanidine derivatives have been employed as a base catalyst for thermal Michael addition. For example, EP 5 803 28 A discloses methacrylate functional polyester prepared by Michael addition catalyzed strong base including guanidine derivatives. The patent family of JP 10330690 A discloses a thermally curable composition via Michael addition catalyzed by strong base including guanidine derivatives. The curable composition consists of organic solvent containing Michael donor, acceptor, and dispersed water-soluble base catalyst, and therefore it stars curing upon drying. DE 102015105987 discloses a thermally curable composition via Michael addition by using a thermal latent basic catalyst. EP 818497 A discloses aqueous emulsions crosslinked by aza-Michael addition. The crosslinking is, however, initiated only upon removal of water. No literature regarding radiation-chemically initiated aza-Michael addition was found.

The object of the present invention was the provision of radiation-curable compositions, which undergo an anionic polymerization via Michael addition and show reasonable reaction times for industrial applications.

The object has been solved by radiation-curable composition comprising
A) at least one photo-base generator, which can generate a super base; and
B) (macro)monomers which are able to undergo an anionic polymerization via Michael addition comprising or consisting of
B1) at least one (macro)monomer having at least one Michael donor group and at least one Michael acceptor group; and/or
B2) at least one (macro)monomer having at least two Michael donor groups and at least one (macro)monomer having at least two Michael acceptor groups.

Without being bound to any theory, the superbase generated from PBG upon irradiation abstracts proton from monomers having a Michael donor group, for example activated methylene such as one in acetylacetone to form the corresponding carbanion. The generated carbanion nucleophilically attacks Michael acceptor such as (meth)acrylate to undergo Michael addition to be polymerized and/or crosslinked. As expected to nature of anionic polymerization, a radiation-curable composition of the present invention is insensitive to oxygen and moisture to carry out the polymerization in the air, and the polymerization proceeds in the dark. Furthermore, the present inventor has surprisingly found that when using a combination of PBG and polyethylenimine (PEI); PEI surprisingly acts as an accelerator of the polymerization and scavenger of CO₂ out-gas at the same time. The preferred embodiment of the present invention thus realizes a rapidly radiation-curable composition to give a continuous cured polymer film without CO₂ bubbles. The radiation-curable compositions provided by the present invention are well suited for 1K radiation-curable adhesives, sealants and/or coating applications.

In a first aspect the present invention refers to a radiation-curable composition comprising
A) at least one photo-base generator, which can generate a super base;
B) (macro)monomers which are able to undergo an anionic polymerization via Michael addition comprising or consisting of
B1) at least one (macro)monomer having a Michael donor group and a Michael acceptor group; and/or
B2) at least one (macro)monomer having at least two Michael donor groups and at least one (macro)monomer having at least two Michael acceptor groups.

In a second aspect the present invention pertains to an adhesive, sealant or coating obtainable by radiation-curing the radiation-curable composition according to the present invention.

Finally, in a third aspect the present invention pertains to a method of radiation-curing the radiation-curable composition according to the present invention, comprising the steps:
providing a radiation-curable composition according to the present invention and exposing the radiation-curable composition to radiation for 10 seconds to 5 minutes.

"One or more", as used herein, relates to "at least one" and comprises 1, 2, 3, 4, 5, 6, 7, 8, 9 or more of the referenced species. Similarly, "at least one" means "one or more", i.e. 1, 2, 3, 4, 5, 6, 7, 8, 9 or more. "At least one", as used herein in relation to any component, refers to the number of chemically different atoms or molecules, i.e. to the number of different types of the referenced species, but not to the total number of atoms or molecules. For example, "at least one photo-base generator" means that at least one type of photo-base generator falling within the definition can be part of the composition, but that also two or more different types of photo-base generators falling within this definition can be present, but does not mean that several compounds of only one type of photo-base generator may be present.

Numeric values specified without decimal places refer to the full value specified with one decimal place. For example, "99 %" means "99.0 %", if not stated otherwise.

The expressions "approx." or "about", in conjunction with a numerical value, refer to a variance of ± 10 % relative to the given numerical value, preferably ± 5 %, more preferably ± 1 %, if not explicitly stated otherwise.

All percentages given herein in relation to the compositions relate to weight-% (wt.-%) relative to the total weight of the respective composition, if not explicitly stated otherwise.

The expression "essentially free of" means that the respective compound can be contained in the composition in principle, but then be present in a quantity that does not interfere with a function of the other components. In the context of the present invention, therefore, the property "essentially free of" a particular compound is preferably considered to be a total weight of less than 0.1 wt.-%, more preferably less than 0.001 wt.-%, in particular free of this particular compound, based on the total weight of the composition.

Numeric ranges specified in the format "in/from x to y" include the values specified. If several preferred numeric ranges are specified in this format, it goes without saying that all ranges resulting from the combination of the different endpoints will also be included.

Molecular weight data refer to the number average molecular weight in g/mol, unless the weight-average molecular weight is explicitly mentioned. It is preferably determined by GPC using polystyrene standards.

These and other aspects, features, embodiments, and advantages of the invention become apparent to the skilled person in the following detailed description and claims. Each feature or embodiment from one aspect of the invention can be used in any other aspect of the invention. Additionally, each feature of the composition or method can be combined with any other feature or embodiment of the method or composition. Furthermore, the examples contained herein are intended to describe and illustrate the invention, but do not restrict it and in particular, the invention is not limited to these examples.

Description of the figures:
**Figure 1** shows the time-course of anionic polymerization of AAEM via Michael addition initiated by photo-base generators.
**Figure 2** shows plots of complex viscosity and relative intensity at 6170 cm⁻¹ vs. reaction time of anionic polymerization of AAEM via Michael addition initiated by WPBG-266.
**Figure 3** shows the time-course of anionic polymerization of AAEM via Michael addition initiated by WPBG-266 under a N₂ atmosphere and in the air.
**Figure 4** shows pictures of obtained polymer from AAEM + WPBG-266 in the presence and absence of PEI (from left to right SP-003, SP-006, SP-012, SP-018, SP-200 and no PEI).
**Figure 5** shows pictures of obtained polymer from AAEM + WPBG-266 in the presence of different PEI content (from left to right 5 wt.-%, 3 wt.-%, 1 wt.-%, 0.5 wt.-%, no PEI).
**Figure 6** shows the time-course of dark cure of AAEM initiated by photo-base generators.
**Figure 7** shows the time-course of dark cure of AAEM initiated by WPBG-266 in the presence of SP-006.
**Figure 8** shows the time-course of anionic polymerization of macromonomers initiated by WPBG-266.
**Figure 9** shows the time-course of anionic polymerization of ItMaIPE1 with AAEM in the presence of PEI initiated by WPBG-266.

The present invention in particular refers to:
A radiation-curable composition comprising or consisting of
A) at least one photo-base generator, which can generate a super base;
B) (macro)monomers which are able to undergo an anionic polymerization via Michael addition comprising or consisting of
B1) at least one (macro)monomer having at least one Michael donor group and at least one Michael acceptor group; and/or
B2) at least one (macro)monomer having at least two Michael donor groups and at least one (macro)monomer having at least two Michael acceptor groups;
C) optionally at least one polyethylenimine;
D) optionally at least one additive.

The photo-base generator according to the present invention is able to generate superbases such as phosphazenes, amidines, and guanidines upon radiation. Superbase are defined as an organic compound whose basicity is greater than that of proton sponge, which has a conjugate pKa of 12.1 (in water). Proton Sponge is a trademark of Sigma-Aldrich for 1,8-bis(dimethylamino)naphthalene. Its pKa is determined as 12.1 in water and 18.62 in acetonitrile. The pKa can be determined in accordance with the method disclosed in Anal. Chem. Insights 2013, 8, 53.

A photo-base generator can be activated by applied electromagnetic radiation. For example via electron-beam curing and ultraviolet curing. Alternatively, curing with visible light can be employed as well. In case of using a photo-base generator, which does not have absorption in the visible light region, a photo-sensitizer has to be additionally present in the composition. Photo-sensitizer are known to the skilled person in the art. Suitable photo-sensitizer are for example disclosed in WO 0308781 A1, WO2006107748 A1 or US 6918984 B2. The irradiation is preferably applied for 10 seconds to 5 minutes, preferably 30 seconds to 2 minutes. In a preferred embodiment the irradiation is not continuously applied until the curing is completed, in particular the curing preferably proceeds once initiated in parts of the composition which are in the dark/shadow.

In preferred embodiments the radiation is UV, more preferably UVA-C radiation, most preferably with an intensity of 0.35 to 0.5 mW/cm², most preferably 0.4 mW/cm².

According to the present invention (macro)monomers are required, which contain at least two Michael donor groups. In general, the Michal donor groups are not restricted. Suitable donor groups are for example described in "Strategic Applications of Named Reactions in Organic Synthesis", pp 286, Elsevier, 2005. For example, aldehyde, ketones, nitriles, and beta-dicarbonyl compounds, including beta-ketoester and 1,3-diketones, are particularly suitable.

The same applies to the (macro)monomers comprising at least two Michael acceptor groups. Suitable acceptor groups are for example described in "Strategic Applications of Named Reactions in Organic Synthesis", pp 286, Elsevier, 2005, as well. A generic definition of Michael acceptor is activated alkene or alkyne and its structure can be varied greatly; virtually any electron-withdrawing group could be used. In particular, alpha, beta-unsaturated carbonyl compounds such as (meth)acrylates and enones are preferred. In preferred embodiments (meth)acrylates are used, more preferably acetoacetoxyalkyl (meth)acrylate preferably having a C1-20 alkyl group, in particular acetoacetoxypropyl (meth)acrylate and acetoacetoxybutyl(meth)acrylate.

Furthermore, (macro)monomers are suitable which contain both at least one Michael acceptor group and at least one Michael donor group as described above.

The term (macro)monomers includes individual monomers as well as macromonomers, which are based on polymerized individual monomers and preferably have a weight average weight of at most 12,000 g/mol.

In general, all macromonomers falling under the definition of claim 1 are suitable and there is no specific limitation in view of their type as such. Suitable monomers include diacids, their corresponding esters and diols. These monomers are in particular suitable to prepare polyester macromonomers, which can be used as pre-macromonomers, for example to synthesize polyurethane based macromonomers. The macromonomers can be polymerized by common methods known to the person skilled in the field of polymers.

Preferred monomers upon which the (macro)monomers are based are selected from 1,6-hexane diol, dimethyl adipate, dimethyl itaconate, dimethyl malonate and mixtures thereof.

According to an embodiment, the at least one photo-base generator is selected from 1,2-Diisopropyl-3[bi(dimethylamin)methylene]guanidium-2-(3-benzoylphenyl)propionate, 1,2-Dicyclohexyl-4,4,5,5-tetramethylbiguanidium n-butyltriphenylborate and (Z)-{[Bis(dimethylamino)methylidene]amino}-N-cyclohexyl(cyclohexylamino)methaniminium tetrakis(3-fluorophenyl)borate, nitrobenzyl capped 1,8-diazabicyclo-[5.4.0]undec-7-ene, benzyl capped 1,8-diazabicyclo-[5.4.0]undec-7-ene, 2-(9-Oxoxanthen-2-yl)propionic acid 1,5,7-triazabicyclo[4.4.0]dec-5-ene salt, 1,5,7-Triazabicyclo[4.4.0]dec-5-ene•HBPh₄ or mixtures thereof; preferably the at least one photo-base generator is selected from 1,2-Diisopropyl-3[Bi(dimethylamin)methylene]guanidium-2-(3-benzoylphenyl)propionate, 1,2-Dicyclohexyl-4,4,5,5-tetramethylbiguanidium n-butyltriphenylborate and (Z)-{[Bis(dimethylamino)methylidene]amino}-N-cyclohexyl(cyclohexylamino)methaniminium tetrakis(3-fluorophenyl)borate or mixtures thereof; most preferably the photo-base generator is 1,2-Diisopropyl-3[Bi(dimethylamin)methylene]guanidium-2-(3-benzoylphenyl)propionate.

Nitrobenzyl capped 1,8-diazabicyclo-[5.4.0]undec-7-ene and benzyl capped 1,8-diazabicyclo-[5.4.0]undec-7-ene are for example described in J. Photopolym. Sci. Technol. 2018, 31, 107. 1,5,7-Triazabicyclo[4.4.0]dec-5-ene•HBPh₄ is for example described in J. Am. Chem. Soc. 2008, 130, 8130.

Further suitable photo-base generators are based on thioxanthone as described in Polymers 2017, 9, 400.

For completeness, the preparation of photobase generator compounds is known in the art and instructive references include: J. Cameron et al., Journal of the American Chemical Society, Vol. 113, No. 11, 4303-4313 (1991); J. Cameron et al., J. Polym. Mater. Sci. Eng., 64, 55 (1991); J. Cameron et al., J. Org. Chem., 55, 5919- 5922 (1990); Sun et al., Journal of the American Chemical Society (2008), 130 (26), 8130-8131; Suyama et al., Progress in Polymer Science (2009), 34 (2), 194-209; Arimitsu et al., Journal of Photopolymer Science and Technology (2010), 23, 135-136; Kobayashi et al., Journal of Photopolymer Science and Technology (2018), 31, 107-112; and, U.S. 5,650,261 (Winkel). Moreover, photobase generators are further described in: M. Shirai et al. Photochemical Reactions of Quatenary Ammonium Dithiocarbamates as Photobase Generators and Their Use in The Photoinitiated Thermal Crosslinking of Poly(gycidylmethacrylate), Journal of Polymer Science, Part A: Polymer Chemistry, Vol. 39, pp. 1329-1341 (2001); and, M. Shirai et al., Photoacid and photobase generators: chemistry and applications to polymeric materials, Progress in Polymer Science, Vol. 21, pp. 1-45, XP-002299394, 1996.

In a preferred embodiment the photo-base generator is WPBG-266, WPBG-300, WPBG-345, commercially available from Fujifilm Wako Pure Chemical Corporation, or a mixture thereof (see chart 1).

According to a preferred embodiment, the at least one (macro)monomer having at least one Michael donor group and at least one Michael acceptor group B1
(i) has a molecular weight of 130 to 12,000 g/mol, preferably 150 to 7,000 g/mol, more preferably 200 to 1,000 g/mol; and/or
(ii) comprises a Michael donor group selected from aldehyde, ketone, nitrile, and beta-dicarbonyl; and/or
   comprises as a Michael acceptor group an alpha, beta-unsaturated carbonyl group; and/or
(iii) is selected from (meth)acrylates or enones, in particular acetoacetoxyalkyl (meth)acrylates.

In preferred embodiments (meth)acrylates are used, more preferably acetoacetoxyalkyl (meth)acrylate preferably having a C1-20 alkyl group, in particular acetoacetoxypropyl (meth)acrylate and acetoacetoxybutyl(meth)acrylate.

In one preferred embodiment the at least one (macro)monomer having at least two Michael donor groups of B2
(i) has a molecular weight of 130 to 12,000 g/mol, preferably 150 to 7,000 g/mol, more preferably 200 to 1,000 g/mol; and/or
(ii) comprises Michael donor groups selected from aldehyde, ketone, nitrile, and beta-dicarbonyl; and/or
(iii) is 2,2-bis({[(3-oxobutanoyl)oxy]methyl})butyl 3-oxobutanoate; and/or
wherein the at least one (macro)monomer having at least two Michael acceptor groups of B2
(i) has a molecular weight of 130 to 12,000 g/mol, preferably 150 to 7,000 g/mol, more preferably 200 to 1,000 g/mol; and/or
(ii) comprises as Michael acceptor groups alpha, beta-unsaturated carbonyl groups; and/or
(iii) is selected from alkyldi(meth)acrylates, alkyl triol tri(meth)acrylates, alkyl tetraol tetra(meth)acrylates, bisphenol A di(meth)acrylates or mixtures thereof, preferably 1,6-hexanediaol diacrylate, trimethylolpropane triacrylate, pentaerythritol tetraacrylate, bisphenol A glycerolate diacrylate, bisphenol A glycerolate dimethacrylate and mixtures thereof.

The radiation-curable compositions of the present invention can comprise at least one polyethyleneimine. In general, all known polyethyleneimines are suitable. Polyethyleneimines are, for example, commercially available from Nippon Shokubai or Sigma-Aldrich Corp. In a preferred embodiment the at least one polyethylenimine has a number average molecular weight of 200 to 70,000 g/mol, preferably 300 to 30,000 g/mol, more preferably 300 to 10,000 g/mol.

The radiation-curable composition of the present invention can further comprise at least one additive. Any additive, which is known to the skilled person in the field of radiation-curable compositions is in general suitable. In particular suitable are tougheners, rheology modifiers, thickeners, leveling agents, radiation-sensitizers or mixtures thereof.

In a preferred embodiment in B2) the at least one (macro)monomer having at least one Michael donor group and at least one (macro)monomer having at least one Michael acceptor group are present in a mole ratio of 2:1 to 1:2, preferably 1:1.

In a preferred embodiment
A) is present in 0.1 to 10 wt.-%, preferably 0.5 to 5 wt.-%; and/or
B) is present in 70 to 99.8 wt.-%, preferably 85 to 90 wt.-% or 80 to 88 wt.-%; and/or
C) is present in 0.1 to 10 wt.-%, preferably 0.5 to 5 wt.-%; and/or
D) is present in 0 to 15 wt.-%, preferably 0.01 to 10 wt.-%, based on the total weight of the composition.

The invention further pertains to an adhesive, sealant or coating, which is obtainable by radiation-curing the radiation-curable composition of the present invention.

Finally, the present invention refers to a method of radiation-curing the radiation-curable composition according to the present invention, comprising the steps:
providing a radiation-curable composition according to the present invention and exposing the radiation-curable composition to radiation, preferably UV, more preferably UVA-C, most preferably with an intensity of 0.35 to 0.5 mW/cm², most preferably 0.4 mW/cm², for 10 seconds to 5 minutes, preferably 30 seconds to 2 minutes.

In a preferred curing method, the reaction temperature is 0 to 70 °C, preferably 10 to 50 °C, more preferably 10 to 35 °C. Furthermore, the reaction is performed in the air or preferably performed in an inert atmosphere, more preferably under nitrogen.

### Examples

### Example 1: Anionic polymerization of acetoacetoxyethyl methacrylate (AAEM) via Michael addition initiated by photo-base generator

Acetoacetoxyethyl methacrylate AAEM and photo-base generators were obtained from Sigma-Aldrich and Fujifilm Wako Pure Chemical Corporation, respectively, and they were used as received. Structure of AAEM and photo-base generators employed are depicted below in Chart 1. AAEM is known as a methacrylate monomer for radical polymerization. AAEM can be also envisaged as a self-polymerizable monomer for anionic polymerization via Michael polyaddition because it consists of acetoacetoxyethyl and methacrylate moieties as Michael donor and acceptor, respectively. The following is a typical procedure for anionic polymerization via Michael addition initiated by photo-base generator.

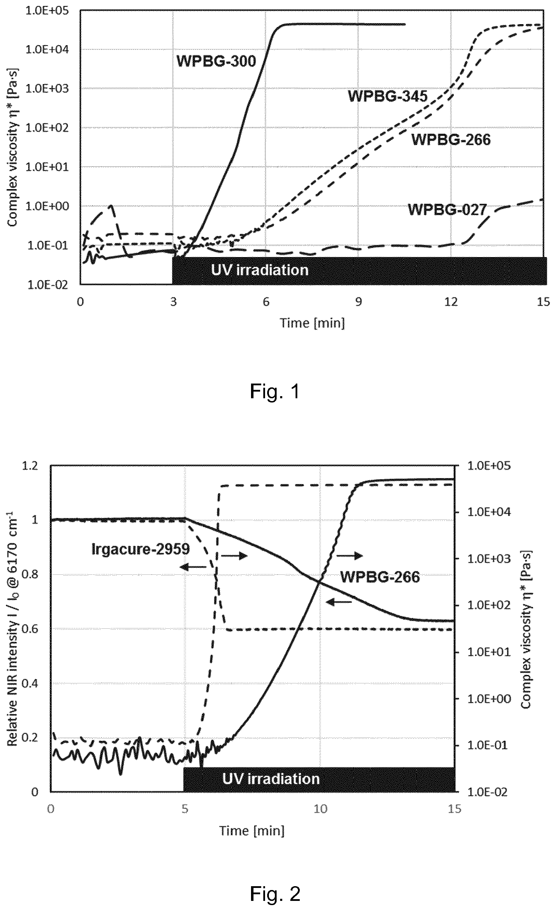

AAEM (1.0 g) and a photo-base generator WPBG-266 (0.030 g) were mixed and then the mixture was immediately placed onto a quartz stage of a rheometer equipped with near infrared (NIR) spectrophotometer. After keeping under a N₂ atmosphere for 3 min at room temperature, UV light (0.40 mW/cm² UVA-C) was irradiated to initiate the reaction. The polymerization was followed by monitoring viscoelastic properties and absorption at 6170 cm⁻¹ (overtone absorption of vC=C-H in AAEM) with continuous UV irradiation under the same atmosphere and at the same temperature. The complex viscosity η* was plotted against reaction time (Figure 1). Half time curing t_{1/2} was determined from the plot as half time to reach a plateau of the complex viscosity and is summarized in Table 1 below.

Increase in complex viscosity was observed in the reaction initiated by photo-base generators WPBG-266, -300, and -345 which generate a super base biguanide (pKa = 31.8). In contrast, little development in the complex viscosity was observed in the reaction initiated by WPBG-027 generating piperidine (pKa = 11.2). The present results demonstrate that photo-base generator generating super base such as guanidine derivatives (WPBG-266, -300, and -345) abstracts an activated proton from acetoacetoxyethyl moiety in AAEM (pKa ≈ 16) to initiate the polymerization upon UV irradiation. The basicity of radiation-chemically generated piperidine from WPBG-027 is too insufficient to initiate the polymerization.

### Chart 1. Structure of AAEM and photo-base generators.

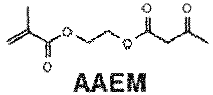

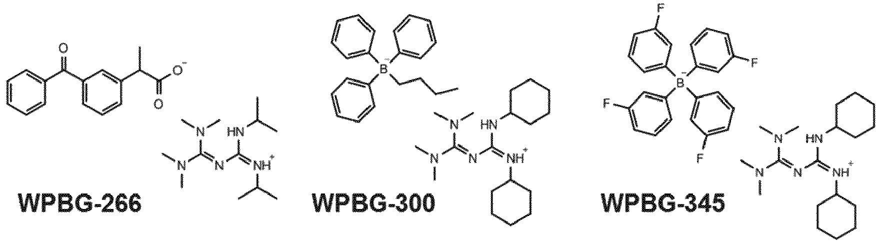

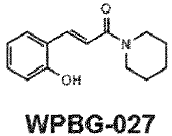

For further confirmation, kinetic behavior of the anionic polymerization of AAEM via Michael addition initiated by WPBG-266 was examined by comparing with radical polymerization of AAEM initiated by commonly used radical initiator Irgacure-2959 since AAEM is known to act as a monomer for radical polymerization. Relative intensity of NIR at 6170 cm⁻¹ (overtone absorption of vC=C-H in AAEM) was plotted against reaction time along with time-course of the complex viscosity η* (Figure 2). The radical polymerization of AAEM initiated by Irgacure-2959 exhibited simultaneous increase in the complex viscosity and decay in the absorbance at 6170 cm⁻¹, indicating that the consumption of double bond of AAME resulted in simultaneous increase of the molecular weight. This is typical kinetic behavior for chain-growth reaction such as radical polymerization. In sharp contrast, inductive period to raise the complex viscosity was observed in the reaction initiated by WPBG-266 despite continuous decay in the absorbance at 6170 cm⁻¹ upon the irradiation, indicating kinetic behavior of step-growth polymerization such as polyaddition. The obtained polymers were rheologically analyzed in the temperature range from 0 to 100 °C to determine their glass transition temperature T_{g} from a peak of the loss modulus G". The glass transition temperatures T_{g} of the obtained polymers initiated Irgacure-2959 and WPBG-266 were determined as 35.1 and 50.1 °C, respectively. The determined different T_{g} in the polymers rationalizes that the initiators give different polymers because T_{g} is characteristic to the polymer structure; Irgacure-2959 gave polymethacrylate by radical polymerization and WPBG-266 did polyester by anionic polymerization via Michael addition.

We herein conclude that AAEM undergoes anionic polymerization via Michael addition initiated by PBG to afford a polyester. Radiation-chemically generated biguanide from PBG abstracts an activated proton in acetoacetoxyethyl to form the corresponding carbanion. The generated anion nucleophilically attacks methacrylate to form a C-C bond and the polymerization proceeds in step-growth mechanism. This is the first example of radiation-chemically initiated Michael polyaddition to the best of our knowledge, although thermal Michael addition is commonly used for curing and/or crosslinking in the application for adhesives and/or coatings.

**Table 1. Half time of radiation-curing of AAEM.**

| **Entry** | **Photo-initiator** | **PEI** | **Half time curing t_{1/2} [min]** |
|---|---|---|---|
| 1 | WPBG-300 | - | 3.2 |
| 2 | WPBG-345 | - | 9.9 |
| 3 | WPBG-266 | - | 11.1 |
| 4 | WPBG-027 | - | - |
| 5 | WPBG-266 | 5wt% SP-003 | 1.9 |
| 6 | WPBG-266 | 5wt% SP-006 | 2.3 |
| 7 | WPBG-266 | 5wt% SP-012 | 3.9 |
| 8 | WPBG-266 | 5wt% SP-018 | 2.4 |
| 9 | WPBG-266 | 5wt% SP-200 | 3.7 |
| 10 | WPBG-266 | 3wt% SP-006 | 2.5 |
| 11 | WPBG-266 | 1wt% SP-006 | 3.9 |
| 12 | WPBG-266 | 0.5wt% SP-006 | 4.5 |
| 13 | Irgacure-2959 | - | 1.2 |

### Example 2: Influence of reaction atmosphere on anionic polymerization of AAEM via Michael addition initiated by photo-base generator.

The anionic polymerization of AAEM via Michael addition was carried out in the air and under a N₂ atmosphere to examine influence of reaction atmosphere upon the polymerization. The following is a typical procedure.

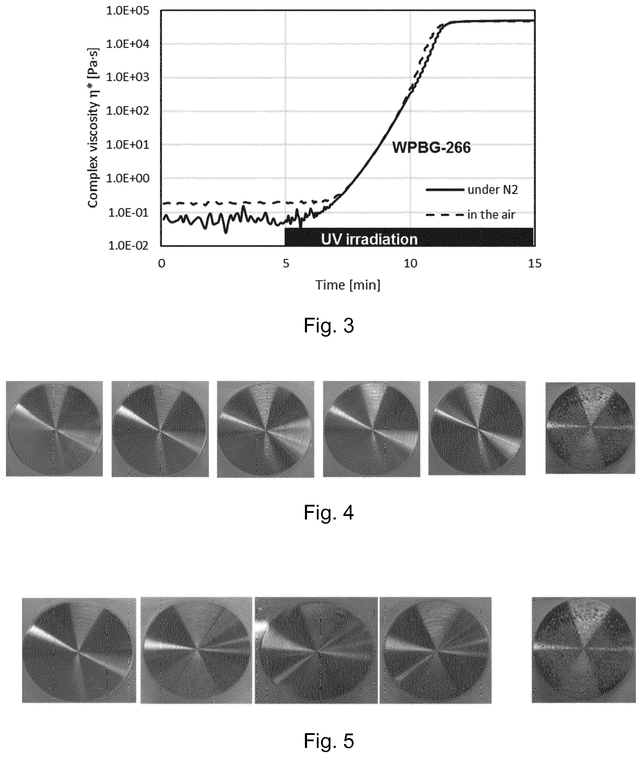

AAEM (1.0 g) and WPBG-266 (0.030 g) were mixed and then the mixture was immediately placed onto a quartz stage of a rheometer equipped with near infrared (NIR) spectrophotometer. After keeping in the air or under a N₂ atmosphere for 5 min at room temperature, UV light (0.40 mW/cm² UVA-C) was irradiated to initiate the reaction and the polymerization was followed by monitoring viscoelastic properties and absorption at 6170 cm⁻¹ (overtone absorption of νC=C-H in AAEM) with continuous UV irradiation under the same atmosphere and at the same temperature. The complex viscosities η* of the polymerizations were plotted against reaction time (Figure 3). Little influence of the reaction atmosphere is observed, as characteristic nature of anionic polymerization. The insensitivity of anionic polymerization via Michael addition to oxygen and water enables us to perform the polymerization in the air. This feature is favorable to realize a cost competitive production line because no additional equipment to remove oxygen and water is required.

### Example 3: Anionic polymerization of AAEM via Michael addition initiated by photo-base generator in the presence of polyethyleneimine (PEI)

The anionic polymerization of AAEM via Michael addition initiated by photo-base generator was carried out in the presence of polyethyleneimine (PEI). PEIs EPOMIN SP-003, SP-006, SP-012, SP-018, and SP-200 were obtained from Nippon Shokubai and employed as received. The number average molecular weights of EPOMIN SP-003, SP-006, SP-012, SP-018, and SP-200 were 300, 600, 1,200, 1,800, and 10,000 g/mol, respectively. The following is a typical procedure.

AAEM (1.0 g), SP-006 (0.050 g), WPBG-266 (0.030 g) were mixed and then the mixture was immediately placed onto a quartz stage of a rheometer equipped with near infrared (NIR) spectrophotometer. After keeping under a N₂ atmosphere for 3 min at room temperature, UV light (0.40 mW/cm² UVA-C) was irradiated to initiate the reaction. The polymerization was followed by monitoring viscoelastic properties and absorption at 6170 cm⁻¹ (overtone absorption of νC=C-H in AAEM) with continuous UV irradiation under the same atmosphere and at the same temperature. The complex viscosity η* was plotted against reaction time to determine the half time curing t_{1/2}. It is clearly observed that PEI accelerates the anionic polymerization of AAEM via Michael addition (Table 1, entries 5, 6, 7, 8, and 9). The curing rate is comparable to the radical polymerization of AAEM initiated by Irgacure-2959. Surprisingly, no CO₂ bubbles were found in the cured polymer initiated by WPBG-266 in the presence of PEI in contrast that CO₂ bubbles were found in the absence of PEI (Figure 4). The present results demonstrate surprising effects of PEI; PEI acts as a reaction accelerator and CO₂ out-gas scavenger at the same time.

The anionic polymerization of AAEM via Michael addition initiated by WPBG-266 was also examined in the presence of different concentration of SP-006. The determined half time curing t_{1/2} exhibited acceleration of the polymerization by PEI (Table 1, entries 10, 11, and 12). CO₂ was nicely scavenged from the cured polymer in the range of PEI content examined (Figure 5). We herein conclude that PEI act as not only reaction promoter for the anionic polymerization via Michael addition but also act as a scavenger of CO₂ out-gas generating from photo-base generator. The present findings enable us to provide a composition curing at the comparable speed to the radical polymerization to give a transparent and continuous film without any physical failure caused by out-gas. Taking into account a potential risk of boron content of WPBG-300 and WPBG-345, the combination of WPBG-266 and PEI will be an environmentally benign curable composition.

### Example 4: Dark cure of AAEM initiated by photo-base generators

The following is a typical procedure of dark cure of AAEM initiated by photo-base generator.

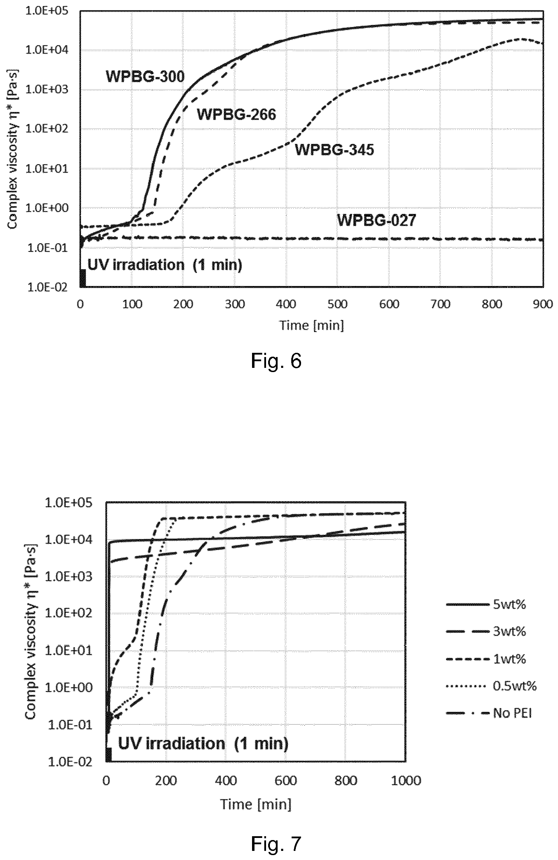

AAEM (1.0 g) and photo-base generator (0.030 g) were mixed and then the mixture was immediately placed onto a quartz stage of a rheometer equipped with near infra-red (NIR) spectrophotometer. After keeping under a N₂ atmosphere for 3 min at room temperature, UV light (0.40 mW/cm2 UVA-C) was irradiated for 1 min to initiate the reaction. The polymerization was followed by monitoring viscoelastic properties and absorption at 6170 cm⁻¹ (overtone absorption of νC=C-H in AAEM) in the dark under the same atmosphere and at the same temperature. The complex viscosity η* was plotted against reaction time (Figure 6). Gradual increase in the complex viscosity was observed in the reaction initiated by photo-base generator generating biguanide WPBG-266, WPBG-300, and WPBG-345 in contrast to no development in the complex viscosity of the reaction initiated by WPBG-027 generating piperidine. The present results clearly demonstrate that the anionic polymerization of AAEM via Michael addition is initiated by photo-base generator generating super base upon UV irradiation and the polymerization proceeds in the dark. No increase in complex viscosity observed in the reaction WPBG-027 employed is attributable to insufficient basicity of piperidine to initiate the reaction.

### Dark cure of AAEM initiated by WPBG-266 in the presence of PEI

The following is a typical procedure of dark cure of AAEM initiated by WPBG-266 in the presence of PEI.

AAEM (1.0 g), SP-006 (0.050 g), and WPBG-266 (0.030 g) were mixed and then the mixture was immediately placed onto a quartz stage of a rheometer equipped with near infrared (NIR) spectrophotometer. After keeping under a N₂ atmosphere for 3 min at room temperature, UV light (0.40 mW/cm² UVA-C) was irradiated for 1 min to initiate the reaction. The polymerization was followed by monitoring viscoelastic properties and absorption at 6170 cm⁻¹ (overtone absorption of νC=C-H in AAEM) in the dark under the same atmosphere and at the same temperature. The complex viscosity η* was plotted against reaction time to find rapid rise followed by gradual increase in the complex viscosity (Figure 7). The present results demonstrate that the anionic polymerization via Michael addition is initiated upon UV irradiation in the presence of PEI and PEI promotes the polymerization in the dark.

### Example 5: Crosslinking by Michael addition initiated by photo-base generators

Crosslinking of trifunctional acetoacetate K-FLEX 7301 (King Industries) with (meth)acrylate crosslinker was examined. The structures of K-FLEX 7301 and the (met)acrylate crosslinkers employed TMPTA, PETTA, BAGLDA, and GAGLDMA are depicted below in Chart 2. Acetoacetate in K-FLEX 7301 and (meth)acrylates in the crosslinker are envisaged to react as Michael donor and acceptor, respectively. K-FLEX and all crosslinkers were used as received. The following is a typical procedure of crosslinking of K-FLEX 7301 with (meth)acrylate crosslinkers via Michael addition initiated by photo-base generators.

K-FLEX 7301 (1.0 g, 2.59 mmol) and HDODA (0.88 g, 3.88 mmol) were mixed to be stoichiometry of acetoacetate : acrylate = 1 : 1. To the mixture were WPBG-266 (0.056 g, 0.11 mmol) and SP-003 (0.094 g, 0.31 mmol) added and then the mixture was immediately placed onto a quartz stage of a rheometer equipped with near infra-red (NIR) spectrophotometer. After keeping under a N₂ atmosphere for 10 min at room temperature, UV light (0.40 mW/cm² UVA-C) was irradiated to initiate the reaction. The polymerization was followed by monitoring viscoelastic properties and absorption at 6170 cm⁻¹ (overtone absorption of νC=C-H) with continuous UV irradiation under the same atmosphere and at the same temperature. The complex viscosity η* was plotted against reaction time to determine half time of curing t_{1/2} and t_{1/2} is summarized in Table 2. The present results clearly demonstrate that the Michael addition initiated by photo-base generator is applicable to crosslinking of multifunctional acetoacetate with (meth)acrylate crosslinkers.

### Chart 2. Structure of monomers for crosslinking via Michael addition.

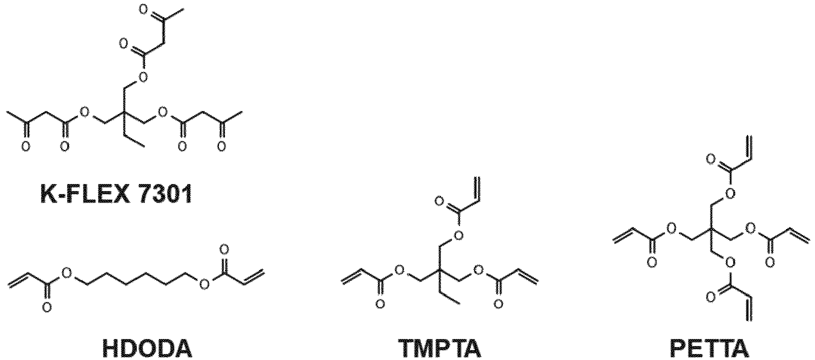

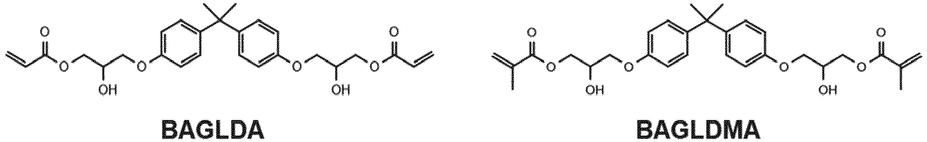

**Table 2. Half time of radiation-curing of K-FLEX 7301 with (meth)acrylate crosslinkers.**

| **(Meth)acrylate crosslinker** | **Photo-base generator** | **PEI** | **Half time curing t_{1/2} [min]** |
|---|---|---|---|
| HDODA | WPBG-300 | - | 2.4 |
| HDODA | WPBG-266 | 5wt% SP-003 | 3.0 |
| TMPTA | WPBG-300 | - | 3.4 |
| TMPTA | WPBG-266 | 5wt% SP-003 | 2.6 |
| PETTA | WPBG-300 | - | 4.8 |
| PETTA | WPBG-266 | 5wt% SP-003 | 4.5 |
| BAGLDA | WPBG-300 | - | 4.5 |
| BAGLDA | WPBG-266 | 5wt% SP-003 | 3.9 |
| BAGLDMA | WPBG-300 | - | 4.3 |
| BAGLDMA | WPBG-266 | 5wt% SP-003 | 4.5 |

### Example 6: Synthesis of macromonomers having Michael donors and acceptors

As an example, macromonomers based on polyester were prepared. The anionically curable polyester based macromonomers were prepared by following a conventional procedure of poly-condensation and/or poly-transesterification. A radical inhibitor was added to suppress radical polymerization during the condensation/transesterification. The synthetic procedure is described following as a typical example. The compositions of macromonomers are listed in Table 3.

The listed diol and diesters along with a radical inhibitor 4-methoxyphenol (0.5 g) were placed in a 250 ml round bottom reaction flask equipped with a condenser. The mixture was stirred at 130 °C for 6 h under a N₂ atmosphere and then additionally stirred for 6 h at the same temperature in vacuo to obtain macromonomer ItMaIPE1. Molecular weight of the resulting macromonomer was determined by GPC.

**Table 3. Composition of macromonomers.**

| | **ItMaIPE1** | **ItMaIPE2** | **ItPE** | **MaIPE** |
|---|---|---|---|---|
| 1,6-Hexanediol | 46.5 | 50 | 42.5 | 47 |
| Dimethyl adipate | 34 | 0 | 34.5 | 35 |
| Dimethyl itaconate | 10.7 | 10 | 23 | 0 |
| Dimethyl malonate | 8.8 | 40 | 0 | 18 |
| M_{w} (GPC) | 6,300 | 3,300 | 4,700 | 3,900 |

### Example 7: Radiation-curing of macromonomers via Michael addition initiated by photo-base generators

Radiation-curing of macromonomers having Michael donors and acceptors was examined. The macromonomers were synthesized in Example 6. The following is a typical procedure of radiation-curing of macromonomers via Michael addition initiated by photo-base generators.

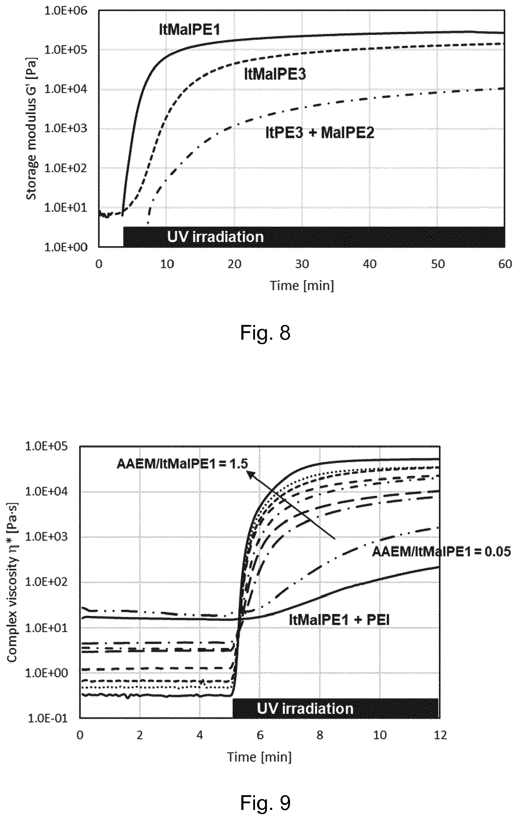

ItMaIPE1 (1.0 g) was mixed with WPBG-266 (0.030 g) and then the mixture was immediately placed onto a quartz stage of a rheometer equipped with near infra-red (NIR) spectrophotometer. After keeping under a N₂ atmosphere for 10 min at room temperature, UV light (0.40 mW/cm² UVA-C) was irradiated to initiate the reaction. The polymerization was followed by monitoring viscoelastic properties and absorption at 6170 cm⁻¹ (overtone absorption of νC=C-H) with continuous UV irradiation under the same atmosphere and at the same temperature. The storage modulus G' was plotted against reaction time (Figure 8) to demonstrate that the macromonomer ItMaIPE1 was cured via Michael addition initiated by photo-base generators.

### Example 8: Radiation-curing of macromonomers with AAEM via Michael addition initiated by photo-base generators in the presence of polyethyleneimine (PEI)

Radiation-curing of macromonomers with AAEM was examined in the presence of PEI. The macromonomers were synthesized in Example 6. The following is a typical procedure.

ItMaIPE1 (1.0 g) was mixed with WPBG-266 (0.030 g), SP-006 (0.050 g), and AAEM (AAEM/ItMaIPE1 = 0, 0.05, 0.1, 0.15, 0.25, 0.5, 0.75, 1.0, and 1.5 (wt/wt)) and then the mixture was immediately placed onto a quartz stage of a rheometer equipped with near infra-red (NIR) spectrophotometer. After keeping under a N₂ atmosphere for 10 min at room temperature, UV light (0.40 mW/cm² UVA-C) was irradiated to initiate the reaction. The polymerization was followed by monitoring viscoelastic properties and absorption at 6170 cm⁻¹ (overtone absorption of νC=C-H) with continuous UV irradiation under the same atmosphere and at the same temperature. The complex viscosity η* was plotted against reaction time (Figure 9) to show that the macromonomer ItMaIPE1 was cured with AAEM via Michael addition initiated PBG. With increasing AAEM content, the initial complex viscosity η* was lowered to accelerate the curing. The present finding allows us to conclude that AAEM acts as a reactive diluent.

The present invention provides a radiation-curable composition by anionic polymerization via Michael addition. Example 1 demonstrates that acetoacetoxyethyl methacrylate AAEM, having Michel acceptor and donor in its molecule, undergoes anionic polymerization via Michael addition initiated by photo-base generator. Radiation-chemically generated biguanide from PBG abstracts an activated proton in acetoacetoxyethyl to form the corresponding carbanion. The generated anion nucleophilically attacks double bond in a methacrylate moiety to form a C-C bond and the polymerization proceeds in step-growth mechanism. This is the first example of radiation-chemically initiated Michael polyaddition to the best of our knowledge, although thermal Michael addition is conventionally used for curing and/or crosslinking in the application for adhesives and/or coatings. The insensitivity of anionic polymerization to oxygen and water enables us to perform the polymerization in the air as demonstrated in Example 2, indicating that no additional investment to remove oxygen and water is required in production lines. These features of a radiation-curable composition provided by the present invention is well suited for durable adhesives, sealants and/or coatings applied by cost competitive production lines.

As demonstrated in Example 3, the anionic polymerization of AAEM was accelerated by polyethyleneimine (PEI) to be comparably fast to the radical polymerization. CO₂ bubbles were found in the cured polymer initiated by WPBG-266, although no bubbles were found in the cured polymer initiated by WPBG-300 and WPBG-345, generating butane and fluorobenzene, respectively. This observation is attributable to the lower solubility and/or permeability of CO₂ in the cured polymer. Surprisingly, Example 3 also revealed that PEI acts as not only accelerator of the polymerization but also scavenger of CO₂ out-gas generating from WPBG-266 to give continuous polymer film without CO₂ bubbles.

Example 4 demonstrated that the polymerization via Michael addition initiated by photo-base generator proceeds in the dark in the presence and absence of PEI, as characteristic nature of anionic polymerization. This feature enables us to avoid continuous irradiation to ensure the curing and incomplete curing in the shadow area. The capability of dark cure of a radiation-curable composition provided by the present invention allows freedom in production lines. For example, selection of PBG and controlling the amount of PEI and irradiation time give open time after the irradiation. During the open time nontransparent parts are assembled and then complete cure is achieved in the dark.

Example 5 demonstrates that multifunctional acetoacetate is crosslinked with (meth)acrylate crosslinkers upon UV irradiation by Michael addition initiated by photo-base generator. The present findings enable us to provide a radiation-curable composition with tunable properties by choosing the Michael donor and acceptor.

Example 6 demonstrates that anionically curable macromonomers are readily prepared by using reactive Michael donor and acceptor. The prepared macromonomers are also radiationally cured via Michael addition initiated by photo-base generator as demonstrated in Example 7.

Malonic and itaconic acid are known as Michael donor and acceptor, respectively, and employed as diacids to synthesize polyester by following a conventional procedure via poly-condensation and/or poly-transesterification. Polyester is conventionally used as a component to prepare polyurethane and can be further modified by reactive functional groups such epoxy and (meth)acrylate. These facts enable us to fabricate any types of macromonomers for radiation-curable composition by anionic polymerization.

Example 8 demonstrates that anionically curable macromonomers are co-curable with an anionically curable monomer such as AAEM and the curing is accelerated by lowering viscosity. The present findings enable us to use an anionically curable monomer as a reactive diluent for anionically curable macromonomers to tune mechanical properties with reasonable curing rate.

We herein conclude that the present invention provides a radiation-curable composition well suited for 1K adhesives, sealants and coatings.

## Claims

1. A radiation-curable composition comprising or consisting of
A) at least one photo-base generator, which can generate a super base;
B) (macro)monomers which are able to undergo an anionic polymerization via Michael addition comprising or consisting of
B1) at least one (macro)monomer having at least one Michael donor group and at least one Michael acceptor group; and/or
B2) at least one (macro)monomer having at least two Michael donor groups and at least one (macro)monomer having at least two Michael acceptor groups;
C) optionally at least one polyethylenimine;
D) optionally at least one additive.

2. The radiation-curable composition according to claim 1, wherein the at least one photo-base generator is selected from 1,2-Diisopropyl-3[bi(dimethylamin)methylene]guanidium-2-(3-benzoylphenyl)propionate, 1,2-Dicyclohexyl-4,4,5,5-tetramethylbiguanidium n-butyltriphenylborate and (Z)-{[Bis(dimethylamino)methylidene]amino}-N-cyclohexyl(cyclohexylamino)methaniminium tetrakis(3-fluorophenyl)borate, nitrobenzyl capped 1,8-diazabicyclo-[5.4.0]undec-7-ene, benzyl capped 1,8-diazabicyclo-[5.4.0]undec-7-ene, 2-(9-Oxoxanthen-2-yl)propionic acid 1,5,7-triazabicyclo[4.4.0]dec-5-ene salt, 1,5,7-Triazabicyclo[4.4.0]dec-5-ene•HBPh₄ or mixtures thereof; preferably the at least one photo-base generator is selected from 1,2-Diisopropyl-3[Bi(dimethylamin)methylene]guanidium-2-(3-benzoylphenyl)propionate, 1,2-Dicyclohexyl-4,4,5,5-tetramethylbiguanidium n-butyltriphenylborate and (Z)-{[Bis(dimethylamino)methylidene]amino}-N-cyclohexyl(cyclohexylamino)methaniminium tetrakis(3-fluorophenyl)borate or mixtures thereof; most preferably the photo-base generator is 1,2-Diisopropyl-3[Bi(dimethylamin)methylene]guanidium-2-(3-benzoylphenyl)propionate.

3. The radiation-curable composition according to claim 1 or 2, wherein the at least one (macro)monomer having at least one Michael donor group and at least one Michael acceptor group B1
(i) has a molecular weight of 130 to 12,000 g/mol, preferably 150 to 7,000 g/mol, more preferably 200 to 1,000 g/mol; and/or
(ii) comprises a Michael donor group selected from aldehyde, ketone, nitrile, and beta-dicarbonyl; and/or
comprises as a Michael acceptor group an alpha, beta-unsaturated carbonyl group; and/or
(iii) is selected from (meth)acrylates or enones, in particular acetoacetoxyalkyl (meth)acrylates.

4. The radiation-curable composition according to any of the preceding claims, wherein the at least one (macro)monomer having at least two Michael donor groups of B2
(i) has a molecular weight of 130 to 12,000 g/mol, preferably 150 to 7,000 g/mol, more preferably 200 to 1,000 g/mol; and/or
(ii) comprises Michael donor groups selected from aldehyde, ketone, nitrile, and beta-dicarbonyl; and/or
(iii) is 2,2-bis({[(3-oxobutanoyl)oxy]methyl})butyl 3-oxobutanoate; and/or
wherein the at least one (macro)monomer having at least two Michael acceptor groups of B2
(i) has a molecular weight of 130 to 12,000 g/mol, preferably 150 to 7,000 g/mol, more preferably 200 to 1,000 g/mol; and/or
(ii) comprises as Michael acceptor groups an alpha, beta-unsaturated carbonyl group; and/or
(iii) is selected from alkyldi(meth)acrylates, alkyl triol tri(meth)acrylates, alkyl tetraol tetra(meth)acrylates, bisphenol A di(meth)acrylates or mixtures thereof, preferably 1,6-hexanediaol diacrylate, trimethylolpropane triacrylate, pentaerythritol tetraacrylate, bisphenol A glycerolate diacrylate, bisphenol A glycerolate dimethacrylate and mixtures thereof.

5. The radiation-curable composition according to any of the preceding claims, wherein the at least one polyethylenimine has a number average molecular weight of 200 to 70,000 g/mol, preferably 300 to 30,000 g/mol, more preferably 300 to 10,000 g/mol.

6. The radiation-curable composition according to any of the preceding claims, wherein the at least one additive is selected from tougheners, rheology modifiers, thickeners, leveling agents, radiation-sensitizers or mixtures thereof.

7. The radiation-curable composition according to any of the preceding claims, wherein in B2) the at least one (macro)monomer having a Michael donor group and at least one (macro)monomer having a Michael acceptor group are present in a mole ratio of 2:1 to 1:2, preferably 1:1.

8. The radiation-curable composition according to any of the preceding claims, wherein
A) is present in 0.1 to 10 wt.-%, preferably 0.5 to 5 wt.-%; and/or
B) is present in 70 to 99.8 wt.-%, preferably 85 to 90 wt.-% or 80 to 88 wt.-%; and/or
C) is present in 0.1 to 10 wt.-%, preferably 0.5 to 5 wt.-%; and/or
D) is present in 0 to 15 wt.-%, preferably 0.01 to 10 wt.-%, based on the total weight of the composition.

9. An adhesive, sealant or coating obtainable by radiation-curing the radiation-curable composition according to any of claims 1 to 8.

10. A method of radiation-curing the radiation-curable composition according to any of claims 1 to 8, comprising the steps: providing a radiation-curable composition according to any of claims 1 to 8 and exposing the radiation-curable composition to radiation, preferably UV, more preferably UVA-C, most preferably with an intensity of 0.35 to 0.5 mW/cm², most preferably 0.4 mW/cm², for 10 seconds to 5 minutes, preferably 30 seconds to 2 minutes.

11. The method of claim 10, wherein the reaction temperature is 0 to 70 °C, preferably 10 to 50 °C, more preferably 10 to 35 °C.

12. The method of claim 10 or 11, wherein the reaction is performed in an inert atmosphere, preferably under nitrogen.
